(19) Europäisches Patentamt / European Patent Office / Office européen des brevets

(11) **EP 4 436 027 A1**

(12) **EUROPEAN PATENT APPLICATION**

(43) Date of publication:
**25.09.2024 Bulletin 2024/39**

(21) Application number: **23163687.9**

(22) Date of filing: **23.03.2023**

(51) International Patent Classification (IPC):
**H02M 5/458** *(2006.01)* **H02M 1/12** *(2006.01)*
**H02M 7/493** *(2007.01)* **H02M 7/5387** *(2007.01)*

(52) Cooperative Patent Classification (CPC):
**H02M 1/12; H02M 5/4585; H02M 7/493;**
**H02M 7/53875;** H02J 3/381; H02J 2300/28

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **ABB SCHWEIZ AG**
**5400 Baden (CH)**

(72) Inventors:
• **ULMER, Daniel**
**4410 Liestal (CH)**
• **KARACA, Orcun**
**8008 Zürich (CH)**
• **DORFLING, Martinus David**
**5400 Baden (CH)**
• **HARNEFORS, Lennart**
**725 91 Västerås (SE)**
• **TSOUMAS, Ioannis**
**8032 Zürich (CH)**

(74) Representative: **Sykora & König Patentanwälte**
**PartG mbB**
**Maximilianstraße 2**
**80539 München (DE)**

(54) **DC LINK VOLTAGE CONTROL FOR ELECTRICAL CONVERTERS WITH MULTIPLE BRANCHES**

(57) An electrical converter (14) comprising at least two converter branches (14a, 14b) connected in parallel between a power source and/or load (12) and a transformer (16). A method for controlling the electrical converter (14) comprises: measuring a DC link voltage ($v_{dc,I}$, $v_{dc,II}$) and determining a reference DC link voltage $(v_{dc,I}^{ref}, v_{dc,II}^{ref})$ of a DC link (26) of each converter branch (14a, 14b); calculating a measured sum voltage ($v_{dc,sum}$), which is the sum of the measured DC link voltages ($v_{dc,I}$, $v_{dc,II}$), and at least one measured difference voltage ($v_{dc,diff}$), which is the difference of two of the at least two measured DC link voltages ($v_{dc,I}$, $v_{dc,II}$); calculating a reference sum voltage $(v_{dc,sum}^{ref})$, which is the sum of the reference DC link voltages $(v_{dc,I}^{ref}, v_{dc,II}^{ref})$ and at least one reference difference voltage $(v_{dc,diff}^{ref})$, which is the difference of two of the at least two reference DC link voltages $(v_{dc,I}^{ref}, v_{dc,II}^{ref})$; calculating a sum voltage error ($\Delta v_{dc,sum}$), which is the difference of the measured sum voltage ($v_{dc,sum}$) and the reference measured sum voltage $(v_{dc,sum}^{ref})$, and at least one difference voltage error ($\Delta v_{dc,diff}$), which is the difference of the measured difference voltage ($v_{dc,diff}$) and the reference difference voltage $(v_{dc,diff}^{ref})$; determining a sum reference quantity $(i_{d,sum}^{ref}, T_{e,sum}^{ref})$ from the sum voltage error ($\Delta v_{dc,sum}$) by inputting the sum voltage error ($\Delta v_{dc,sum}$) into a sum PI controller (40a); determining at least one difference reference quantity $(i_{d,diff}^{ref}, T_{e,diff}^{ref})$ from the at least one difference voltage error ($\Delta v_{dc,diff}$) by inputting the difference voltage error ($\Delta v_{dc,diff}$) into a difference PI controller (40b), wherein a gain ($k_{p,sum}$) of the sum PI controller (40a) is higher than a gain ($k_{p,diff}$) of the difference PI controller (40b); and controlling the converter branches (14a, 14b) based on the sum reference quantity $(i_{d,sum}^{ref}, T_{e,sum}^{ref})$ and the at least one difference reference quantity $(i_{d,diff}^{ref}, T_{e,diff}^{ref})$.

EP 4 436 027 A1

# Fig. 2

**Description**

FIELD OF THE INVENTION

The invention relates to the field of high power converter control. In particular, the invention relates to a method, a computer program, a computer-readable medium and a controller for controlling an electrical converter. The invention also relates to the electrical converter.

BACKGROUND OF THE INVENTION

Electrical generators with multiple stator windings are employed for generating electrical power from wind energy. The converter for converting the voltages from the stator windings into a voltage to be supplied to an electrical grid may have several branches, and in particular a separate branch for every stator winding. The resulting branch voltages are supplied to the electrical grid via a transformer, which is connected via multiple secondary windings with the converter branches.

It may be that the converter branches are controlled independently from each other, however, to reduce total harmonic distortion at the point of common coupling with the electrical grid, i.e. the connection point of the transformer with the electrical grid, it may be beneficial to coordinate the control of the converter branches.

DESCRIPTION OF THE INVENTION

It is an objective of the invention to improve the control of an electrical converter with at least two converter branches connected in parallel between a power source and/or load and a transformer. Further objectives of the invention are to reduce total harmonic distortion of such an electrical converter.

These objectives are achieved by the subject-matter of the independent claims. Further exemplary embodiments are evident from the dependent claims and the following description.

An aspect of the invention relates to a method for controlling an electrical converter. The electrical converter may be a low- or medium-voltage converter adapted for processing voltages up to 5 kV or more. The electrical converter comprises at least two converter branches, which at one end are connected in parallel to a power source and/or load, such as a generator and/or motor. Such an electrical machine may comprise at least two winding systems and each converter branch may be connected to a winding system. At the other end, each converter branch may be connected to a winding of a transformer.

According to an embodiment of the invention, the method comprises: measuring a DC link voltage and determining a reference DC link voltage of a DC link of each converter branch; calculating a measured sum voltage, which is the sum of the measured DC link voltages, and at least one measured difference voltage, which is the difference of two of the at least two measured DC link voltages; and calculating a reference sum voltage, which is the sum of the reference DC link voltages and at least one reference difference voltage, which is the difference of two of the at least two reference DC link voltages.

Each converter branch may be composed of a machine-side converter, which is connected to the source and/or load. The machine-side converter is connected via a DC link with a grid-side converter, which is connected to the transformer. The voltage in each DC link is measured and a reference DC link voltage for the DC link is determined. This may be done by a super-ordinated controller, which, for example, controls the power flow through the converter.

From the measured and reference DC link voltages, a sum and differences are calculated. When there are N converter branches, the difference voltages for N-1 pairs of converter branches are calculated.

According to an embodiment of the invention, the method further comprises: calculating a sum voltage error, which is the difference of the measured sum voltage and the reference sum voltage, and at least one difference voltage error, which is the difference of the measured difference voltage and the reference difference voltage. For each pair of converter branches, for which the measured voltages and reference voltages have been determined, also a difference voltage error is determined. I.e. there may be N-1 difference voltage errors.

The sum voltage error and the difference voltage errors are used for controlling the converter branches, in particular for determining sum and difference reference quantities, such as currents and/or torques references, which are further used in current and/or torque controllers for controlling the converter branches.

According to an embodiment of the invention, the method further comprises: determining a sum reference quantity from the sum voltage error by inputting the sum voltage error into a sum PI controller. The sum reference quantity, such as a sum reference current and/or sum reference torque, may be determined by applying a PI controller to the sum voltage error. A sum feedforward term may be added to the output of the sum PI controller to determine the sum reference quantity.

According to an embodiment of the invention, the method further comprises: determining a difference reference quantity from the at least one difference voltage error by inputting the difference voltage error into a difference PI controller. A difference reference quantity, such as a difference reference current and/or difference reference torque, may be determined by applying a PI controller with control parameters different from the one of the sum reference quantity, to the difference voltage error. A difference feedforward term may be added to the output of the difference PI controller to determine the difference reference quantity.

According to an embodiment of the invention, a gain of the sum PI controller is higher than a gain of the difference PI controller. Since the sum of the DC link voltages usually has much lower ripple than the DC link voltage of each DC link separately, the sum PI controller may have a higher gain. This may allow for a faster response for controlling the sum DC link error.

According to an embodiment of the invention, the method further comprises:
controlling the converter branches based on the sum reference quantity and the at least one difference reference quantity. These quantities may be input into further controllers, which determine switching commands for the converter branches. These controllers may be based on carrier-based pulse width modulation (CB-PWM) and/or optimized pulse patterns (OPPs).

According to an embodiment of the invention, a proportional gain of the sum PI controller is higher than a proportional gain of the difference PI controller. In particular, the proportional gain may influence the response time of the PI controller. The gain of the sum PI controller may be at least 10 times higher than the gain of the difference PI controller.

According to an embodiment of the invention, the at least one difference voltage error is input into a difference low-pass filter, before it is input into the difference PI controller. The low-pass filter is used to filter out the strong ripple that appears in the DC link voltage difference(s).

According to an embodiment of the invention, the sum voltage error is directly input into the sum PI controller without low-pass filtering or the sum voltage error is input into a sum low-pass filter, before it is input into the sum PI controller, which sum low-pass filter has a lower time constant than the difference low-pass filter. Since the ripple harmonics for the sum of the DC link voltages appear at higher frequencies, no low-pass filter at all or a low-pass filter with a very low time constant may be employed, also allowing a much higher PI controller gain and thus a much faster dynamic response.

According to an embodiment of the invention, the sum reference quantity and the at least one difference reference quantity are transformed back to at least two reference quantities for the at least two converter branches. Each converter branch may be controlled based on its reference quantity. It may be that the converter branches are controlled with a dedicated controller, which receives control quantities for the respective converter branch. In this case, the sum reference quantity and the at least one difference reference quantity, such as reference current and/or reference torque, are transformed into a reference quantity for the respective converter branch. For example, for one sum reference quantity and one difference reference quantity, the reference quantities for the converter branches are the weighted sum and difference of the sum and difference reference quantities.

According to an embodiment of the invention, the sum reference quantity is input into a sum current controller, which is controlling a sum of input currents in the converter branches, wherein the at least one difference reference quantity is input into a respective difference current controller controlling a difference of two of the input currents in two converter branches. The sum and the at least one difference reference quantity, such as a current, is calculated after an appropriate rotation transformation, so that all are referred to a common stationary reference frame. It is also possible that there is a sum current controller and a difference current controller for each respective difference. The outputs of these controllers may be transformed back into reference voltages for each converter branch, which are then used to control the converter branches.

According to an embodiment of the invention, the sum and differences of the input currents are determined in a common rotating reference frame. To this end, the measured currents for the converter branches are transformed into the respective rotating reference frame and the sum and the differences are calculated. The outputs of the respective current controllers are transformed back to the reference voltages for each converter branch in a stationary reference frame.

According to an embodiment of the invention, the method further comprises: determining switching commands for the converter branches based on the sum reference quantity and the at least one difference reference quantity; wherein the converter branches are controlled by applying the switching commands to the converter branches. As already mentioned, this may be done based on the reference voltages for the converter branches. These may be used in optimized pulse pattern controllers or pulse width modulation controllers, which are employed for the respective converter branches.

According to an embodiment of the invention, each converter branch comprises a machine-side converter and a grid-side converter, which are interconnected by a DC link. Each converter branch may be configured for converting three-phase electrical quantities with a fundamental voltage, current and frequency into three-phase electrical quantities with another fundamental voltage, current and frequency. The machine side-converter and optionally the grid-side converter may be controlled based on the switching commands.

According to an embodiment of the invention, the machine-side converters and/or the grid-side converters are controlled based on the sum reference quantity and the at least one difference reference quantity. There may be a sum current and/or sum torque controller, into which the sum reference quantity is input, and one or more difference current and/or difference torque controllers, into which the difference reference quantities are input.

According to an embodiment of the invention, opposite to the electrical machine, each converter branch may be connected to a secondary winding of the transformer. The secondary winding and a primary winding of the transformer may have a common core. The primary winding may be used to connect the converter system to an electrical grid. One common transformer with multiple sets of secondary windings or several transformers connected in series may be used. The series-connected transformers may each have one set of secondary three-phase windings.

Further aspects of the invention relate to a computer program for controlling an electrical converter, which, when being executed by a processor, is adapted to carry out the steps of the method as described herein, and to a computer-readable medium, in which such a computer program is stored.

A computer-readable medium may be a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a non-transitory or transitory medium.

A further aspect of the invention relates to a controller for controlling an electrical converter. The controller is adapted for performing the method as described herein. The controller may comprise one or more processors, in which the method is run as software. It also may be that the method is at least partially or completely implemented in hardware, such as a DSP or FPGA.

A further aspect of the invention relates to an electrical converter, which is controlled such as described herein.

According to an embodiment of the invention, the electrical converter comprises at least two converter branches connected in between a power source and/or load and a transformer. The electrical converter further comprises a controller such as described herein.

In general, it has to be understood that features of the method as described in the above and in the following may be features of the computer program, the computer-readable medium, the controller and the electrical converter as described in the above and in the following, and vice versa.

These and other aspects of the invention will be apparent from and elucidated with reference to the embodiments described hereinafter.

BRIEF DESCRIPTION OF THE DRAWINGS

The subject-matter of the invention will be explained in more detail in the following text with reference to exemplary embodiments which are illustrated in the attached drawings.

Fig. 1 schematically shows a converter system according to an embodiment of the invention.

Fig. 2 schematically shows a controller according to an embodiment of the invention and illustrates a method according to an embodiment of the invention.

Fig. 3 schematically shows an average and difference current controller according to an embodiment of the invention.

Fig. 4 and 5 schematically show current controllers according to an embodiment of the invention.

Fig. 6 and 7 schematically show torque controllers according to an embodiment of the invention.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

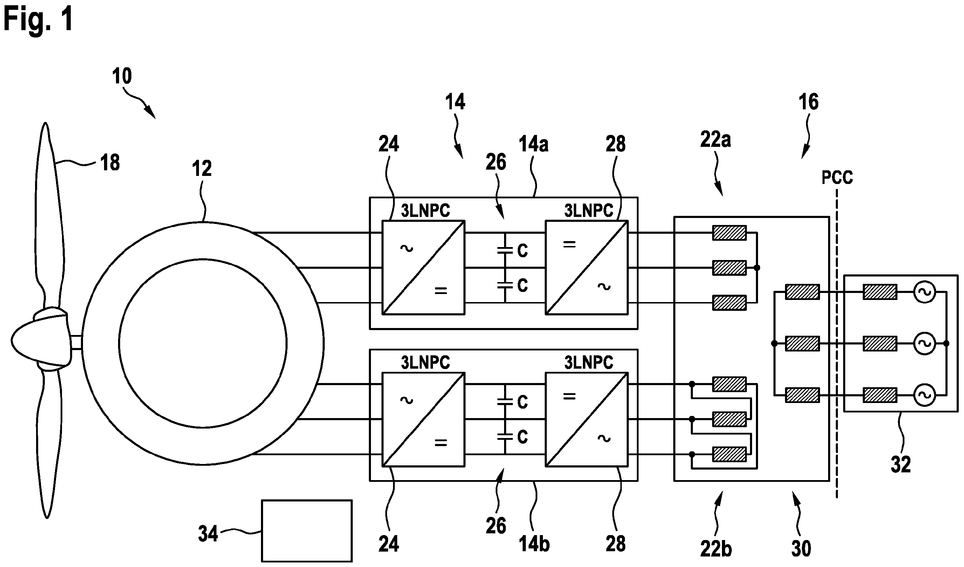

Fig. 1 schematically shows a converter system 10, which may be a wind energy conversion system, e.g. a gearless wind energy conversion system. The converter system 10 comprises a rotating electrical machine 12, at least two converter branches 14a, 14b and a transformer 16. The at least two converter branches 14a, 14b form an electrical converter 14. With two converter branches 14a, 14b, the converter system 10 may be seen as a double conversion line system.

The rotating electrical machine 12 may be a generator, e.g. a synchronous generator, or a motor and comprises two or more winding systems. In the following it is assumed that the rotating electrical machine 12 is a synchronous generator without loss of generality. The rotating electrical machine 12 may be connected with a wind turbine 18.

Each converter branch 14a, 14b may be composed of a machine-side converter or rectifier 24, a DC link 26 and a grid-side converter or inverter 28. Both the rectifier 24 and the inverter 28 may be two-level or, as depicted here, three-level converters or they may have even more voltage levels. The rectifier 24 and the inverter 28 may be back-to-back converters and/or 3LNPC (Three-Level Neutral Point Clamped) converters. The machine-side converter 24 converts the AC voltage of the respective winding system of the rotating electrical machine 12 into a DC voltage $v_{dc,I}$ or $v_{dc,II}$ supplied to the DC link 26 and to the grid-side converter 28. The grid-side converter 28 converts the DC voltage $v_{dc,I}$ or $v_{dc,II}$ into an AC output voltage with a three-phase output current, which is supplied to secondary windings 22a, 22b of the transformer 16.

The transformer 16 further comprises a primary winding 30, which is connected to an electrical grid 32 via a point of common coupling PCC. The transformer 16 may be a wye/delta-wye transformer.

The electrical converter 14 and the at least two converter branches 14a, 14b are controlled by a controller 34. The controller 34 may comprise a processor and a computer-readable medium. The computer-readable medium may store a computer program for performing the control method as described herein. Alternatively or additionally, the controller 34 may comprise a circuitry, e.g. an FPGA, ASIC and/or DSP, which is configured for performing the control method. The controller 34 may be configured for modulating and/or switching the rectifiers 24 and the inverters 28. In particular, the rectifiers 24 and/or the inverters 28 may be switched with OPPs. The method as described below may be applied to the rectifiers 24, which are inverters if there is a motor instead of a generator 12.

In the following, we consider mainly the control of the DC link voltage $v_{dc,I}$, $v_{dc,II}$ of the DC links 26. This control may be performed by DC link voltage balancing controllers, which may be parts or modules of the controller 34. By keeping the DC link voltage amplitude constant, transfer of the active power from the generator 12 to the grid 32 is achieved.

Without loss of generality, the grid-side converters 28 are considered. However, the proposed algorithms address also the machine-side converters 24, whenever the DC link control is made from the machine-side. Also, without a loss of generality, the load or source on the machine side, i.e. the input side of the converter branches 14a, 14b, is considered as generator.

The mathematical model of the DC link 26, linearized around the nominal voltage $V_{dc,nom}$, is described by the following equation:

$$\frac{dv_{dc}}{dt} = \frac{2}{C\,V_{dc,nom}}\left(p_{dc} - p_{ac}\right) \qquad (1)$$

The active power $p_{dc}$ in the DC link 26 is coming from the generator 12 and is transferred to the AC side of the grid-side converters 28. Since the control of the AC side current is done in a rotating frame aligned to the PCC voltage, the AC active power $p_{ac}$ at the PCC is given by the product of the d-axis PCC voltage and the d-axis current $i_d$. Thus, (1) can be rewritten as

$$\frac{dv_{dc}}{dt} = \frac{2}{C\,V_{dc,nom}}\left(p_G/2 - v_{d,PCC}\,i_d\right), \qquad (2)$$

where the total generator power $p_G$ is divided by two, assuming that it is distributed equally to each of the two conversion lines.

Considering the system defined in (2), the d-axis current reference $i_d^{ref}$ can be derived from the output of a PI controller at the DC link voltage error as follows:

$$i_d^{ref} = \left(k_p + k_i\frac{1}{s}\right)\left(v_{dc} - v_{dc}^{ref}\right) + \frac{\hat{p}_G/2}{\hat{v}_{d,PCC}}, \qquad (3)$$

where

$$k_{\mathrm{p}} = \omega_{\mathrm{dcv}} \frac{C_{\mathrm{dc}} V_{\mathrm{dc,nom}}}{2 \ \hat{v}_{\mathrm{d,PCC}}}. \tag{4}$$

In (4) $\omega_{\mathrm{dcv}}$ denotes the desired closed-loop bandwidth. The hat denotes estimated values. The second summand in (3) is a feedforward term calculated by the estimated active power at the generator output and the estimated d-axis PCC voltage.

Typically, the controller described by (3) is applied to each DC link voltage $v_{\mathrm{dc,I}}$, $v_{\mathrm{dc,II}}$ separately and its output defines the d-axis current reference $i_{\mathrm{d}}^{\mathrm{ref}}$ for each converter 28.

The DC link voltage $v_{\mathrm{dc,I}}$, $v_{\mathrm{dc,II}}$ contains a significant ripple, caused by the current harmonics on the grid 32 and the generator side 12. Since it is not desired that the controller 34 reacts on the voltage ripple, the DC link error for each converter branch 14a, 14b is usually low-pass filtered. However, the presence of a low-pass filter sets an upper limit to the maximum value of a PI controller gain in the DC link voltage controller, compromising the dynamic performance of a closed loop voltage control, to which the output of the DC link ripple controller is input.

Therefore it is proposed to consider the sum and the difference $v_{\mathrm{dc,sum}}$, $v_{\mathrm{dc,diff}}$ of the DC link voltages instead of the voltages $v_{\mathrm{dc,I}}$, $v_{\mathrm{dc,II}}$ of each DC link 26 separately. The linearized model of each DC link 26 is given by

$$\frac{\mathrm{d}v_{\mathrm{dc,I}}}{\mathrm{d}t} = \frac{2}{C \ V_{\mathrm{dc,nom}}} \left( p_{\mathrm{G,I}} - v_{\mathrm{d,PCC}} \ i_{\mathrm{d,I}} \right) \tag{5}$$

$$\frac{\mathrm{d}v_{\mathrm{dc,II}}}{\mathrm{d}t} = \frac{2}{C \ V_{\mathrm{dc,nom}}} \left( p_{\mathrm{G,II}} - v_{\mathrm{d,PCC}} \ i_{\mathrm{d,II}} \right) \tag{6}$$

Taking the sum and the difference of (10) and (11) we get:

$$\frac{\mathrm{d}v_{\mathrm{dc,sum}}}{\mathrm{d}t} = \frac{2}{C \ V_{\mathrm{dc,nom}}} \left( p_{\mathrm{G}} - v_{\mathrm{d,PCC}} \ i_{\mathrm{d,sum}} \right) \tag{7}$$

$$\frac{\mathrm{d}v_{\mathrm{dc,diff}}}{\mathrm{d}t} = \frac{2}{C \ V_{\mathrm{dc,nom}}} \left( p_{\mathrm{G,I}} - p_{\mathrm{G,II}} - v_{\mathrm{d,PCC}} \ i_{\mathrm{d,diff}} \right), \tag{8}$$

where PG = $p_{\mathrm{G,I}}$ + $p_{\mathrm{G,II}}$, $v_{\mathrm{dc,sum}}$ = $v_{\mathrm{dc,I}}$ + $v_{\mathrm{dc,II}}$, $v_{\mathrm{dc,diff}}$ = $v_{\mathrm{dc,I}}$ - $v_{\mathrm{dc,II}}$, $i_{\mathrm{d,sum}}$ = $i_{\mathrm{d,I}}$ + $i_{\mathrm{d,II}}$ and $i_{\mathrm{d,diff}}$ = $i_{\mathrm{d,I}}$ - $i_{\mathrm{d,II}}$.

Considering (7) and (8), one can design two DC balancing controllers for the sum and the difference $v_{\mathrm{dc,sum}}$, $v_{\mathrm{dc,diff}}$ of the DC link voltages. Their output is the sum and difference d-axis current reference of the grid-side current controllers 28:

$$i_{\mathrm{d,sum}}^{\mathrm{ref}} = \left( k_{\mathrm{p,sum}} + k_{\mathrm{i,sum}} \frac{1}{s} \right) \left( v_{\mathrm{dc,sum}} - v_{\mathrm{dc,sum}}^{\mathrm{ref}} \right) + \frac{\hat{p}_{\mathrm{G}}}{\hat{v}_{\mathrm{d,PCC}}}, \tag{9}$$

$$i_{\mathrm{d,diff}}^{\mathrm{ref}} = \left( k_{\mathrm{p,diff}} + k_{\mathrm{i,diff}} \frac{1}{s} \right) \left( v_{\mathrm{dc,diff}} - v_{\mathrm{dc,diff}}^{\mathrm{ref}} \right) + \frac{\hat{p}_{\mathrm{G,I}} - \hat{p}_{\mathrm{G,II}}}{\hat{v}_{\mathrm{d,PCC}}} \tag{10}$$

The advantage of the above formulation compared to (3) is that the sum $v_{\mathrm{dc,sum}}$ of the DC link voltages has much lower ripple than the DC link voltage $v_{dc,I}$, $v_{dc,II}$ of each DC link 26 separately. Furthermore, the ripple harmonics for the sum $v_{dc,sum}$ of the DC link voltages appear at higher frequencies. Thus, either no low-pass filter at all or a low-pass filter with a very low time constant can be employed, allowing for a much higher proportional gain and a much faster dynamic response. The difference voltage ripple is almost as high as the ripple of each DC link voltage separately, but there is no need to control it fast. Therefore, no feedforward term is required and a low pass filter with a relatively high time constant (low cut off frequency) can be used for filtering out the ripple.

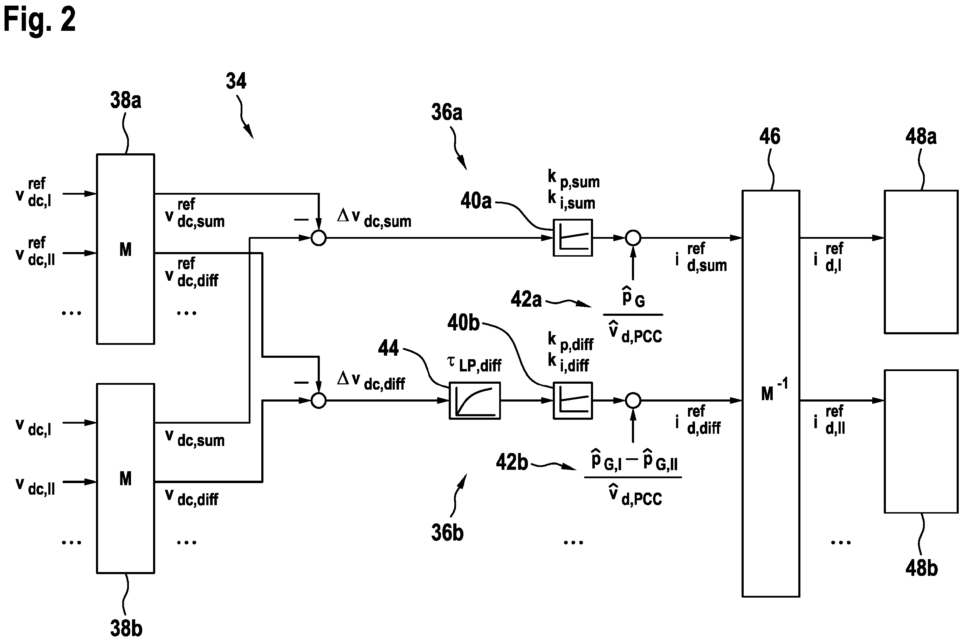

Fig. 2 shows a sum balancing controller 36a and a difference balancing controller 36b based on (9) and (10). As shown in Fig. 2, the above derivation can be generalized to N converter branches 14a, 14b, and then one sum balancing controller 36a and N-1 difference balancing controllers 36b are used.

The controller 34 receives a measured or estimated DC link voltage $v_{dc,I}$, $v_{dc,II}$ for each DC link 26 and determines or receives a reference DC link voltage $v_{dc,I}^{ref}$, $v_{dc,II}^{ref}$ for each DC link 26. The reference DC link voltages $v_{dc,I}^{ref}$, $v_{dc,II}^{ref}$ may be provided by a superordinated controller.

A measured sum voltage $v_{dc,sum}$ is calculated by block 38a, which measured sum voltage $v_{dc,sum}$ is the sum of the measured DC link voltages $v_{dc,I}$, $v_{dc,II}$. Block 38a also calculates at least one measured difference voltage $v_{dc,diff}$, which is the difference of two of the at least two measured DC link voltages $v_{dc,I}$, $v_{dc,II}$.

Analogously, a reference sum voltage $v_{dc,sum}^{ref}$ is calculated by block 38b, which reference sum voltage $v_{dc,sum}^{ref}$ is the sum of the reference DC link voltages $v_{dc,I}^{ref}$, $v_{dc,II}^{ref}$. Block 38b also calculates at least one reference difference voltage $v_{dc,diff}^{ref}$, which is the difference of two of the at least two reference DC link voltages $v_{dc,I}^{ref}$, $v_{dc,II}^{ref}$.

For two quantities $x_I$ and $x_{II}$, the corresponding sum and difference quantities are calculated in blocks 38a, 38b as follows:

$$x_{sum} = x_I + x_{II} \qquad \text{and} \qquad x_{diff} = x_I - x_{II} \,. \qquad (11)$$

Note that in the drawings, the symbol "+"in the case of an addition of two quantities is omitted. Only the symbol "-" is shown for the case of a subtraction.

In the case of N converter branches, this is generalized to

$$x_{s/d} = Mx \qquad\qquad (22)$$

where $x_{s/d}$ is a vector composed of one sum quantity $x_{sum}$ and N-1 difference quantities $x_{diff,i}$, $x$ is a vector composed of the N branch quantities $x_i$ and $M$ is a matrix with all entries 1 in the row of the sum quantity $x_{sum}$ and in the other rows having one entry 1 and and one entry -1 for the respective pair of branch quantities $x_i$ for which the difference quantity $x_{diff,i}$ is to be formed. It may be that the matrix $M$ is normalized, i.e. that some or all rows are divided by N.

After block 38a, 38b, a sum voltage error $\Delta v_{dc,sum}$ is calculated, which is the difference of the measured sum voltage $v_{dc,sum}$ and the reference measured sum voltage $v_{dc,sum}^{ref}$. Also, at least one (in general N-1) difference voltage error $\Delta v_{dc,diff}$ is calculated, each of which is the difference of the measured difference voltage $v_{dc,diff}$ and the reference difference voltage $v_{dc,diff}^{ref}$ of the respective pair of converter branches 14a, 14b.

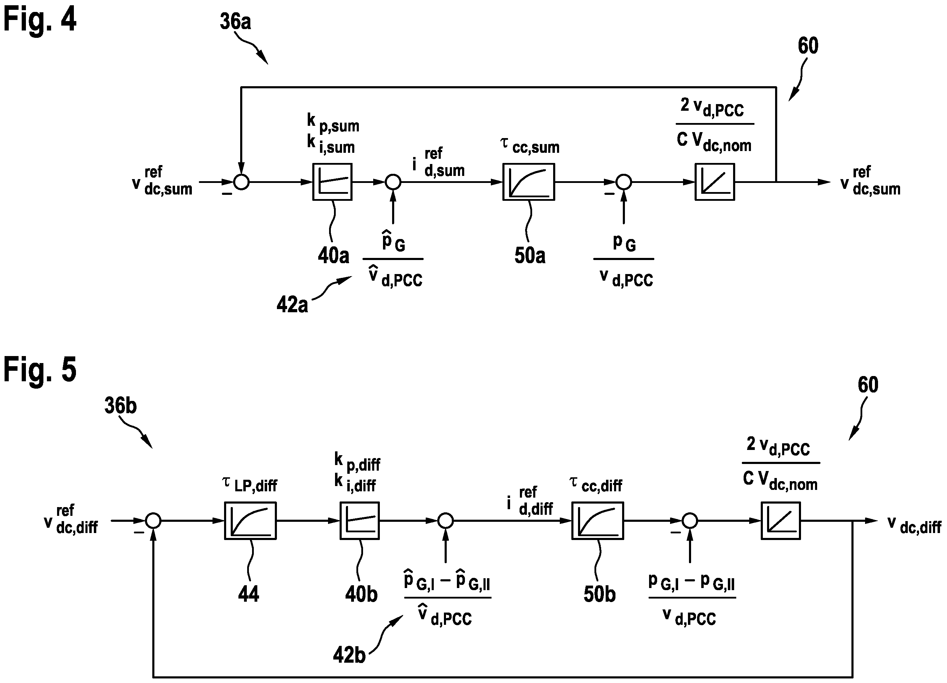

The sum voltage error $\Delta v_{dc,sum}$ is input into a sum PI controller 40a, which is a PI (proportional-integral) controller with proportional gain $k_{p,sum}$ and integral gain $k_{i,sum}$. In general, PI controllers will be depicted with the same symbol in the drawings. A feedforward term 42a is added to the output of the PI controller 40a for determining the sum reference quantity $i_{d,sum}^{ref}$, $T_{e,sum}^{ref}$, which may be a sum current reference $i_{d,sum}^{ref}$ (as shown) and/or a sum reference torque $T_{e,sum}^{ref}$ (see Fig. 5).

Each difference voltage error $\Delta v_{dc,diff}$ is input into a difference low-pass filter 44 with time constant $\tau_{LP,diff}$, before it is input into a difference PI controller 40b. This has to be compared with the sum balancing controller 36a, where the sum voltage error $\Delta v_{dc,sum}$ is directly input into the sum PI controller 40a without low-pass filtering. However, it is also possible that the sum voltage error $\Delta v_{dc,sum}$ is input into a sum low-pass filter with time constant $\tau_{LP,sum}$, before it is input into the difference PI controller 40a, which sum low-pass filter has a lower time constant $\tau_{LP,sum}$ than the difference low-pass filter. For example, $\tau_{LP,sum}$ is at least 10 times smaller as $\tau_{LP,diff}$.

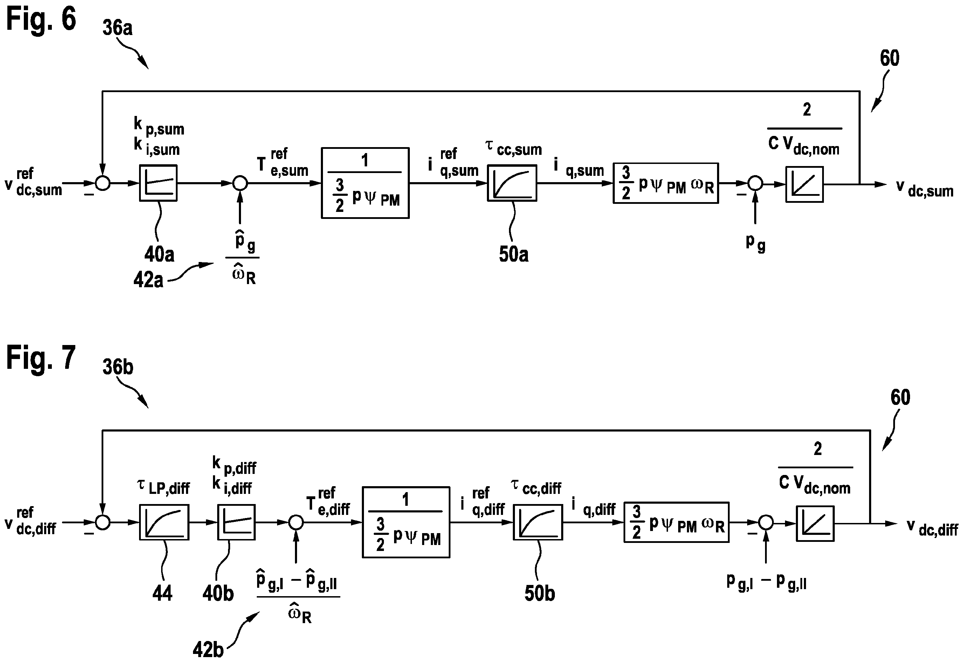

The result of the difference low-pass filter 44 is input into a difference PI controller 40b, which is a PI (proportional-integral) controller with proportional gain $k_{p,diff}$ and integral gain $k_{i,diff}$. Optionally, a feedforward term 42b is added to the output of the PI controller 40b for determining a difference reference quantity $i^{\mathrm{ref}}_{d,diff}, T^{\mathrm{ref}}_{e,diff}$, which may be a difference current reference $i^{\mathrm{ref}}_{d,diff}$ (as shown) and/or a difference reference torque $T^{\mathrm{ref}}_{e,diff}$ (see Fig. 6).

The (proportional) gain $k_{p,sum}$ of the sum PI controller 40a is higher than the (proportional) gain $k_{p,diff}$ of the difference PI controller 40b. For example, the gain $k_{p,sum}$ of the sum PI controller 40a is at least 10 times higher as the gain $k_{p,diff}$ of the difference PI controller 40b.

The integral gain $k_{i,sum}$ of the sum PI controller 40a also may be higher as the integral gain $k_{i,diff}$ of the difference PI controller 40b. If the feedforward term 42a (such as $\hat{p}_G/\hat{v}_{d,PCC}$) reflects the actual ratio $p_G/v_{d,PCC}$ accurately, the integral gain may not be so important. If the feedforward term 42a is not as accurate and/or it is not updated as fast as it should, then the increase of integral gain $k_{i,sum}$ of the sum PI controller 40a may be beneficial.

The converter branches 14a, 14b are then controlled based on the sum reference quantity $i^{\mathrm{ref}}_{d,sum}, T^{\mathrm{ref}}_{e,sum}$ and the at least one difference reference quantity $i^{\mathrm{ref}}_{d,diff}, T^{\mathrm{ref}}_{e,diff}$. Switching commands for the converter branches 14a, 14b are determined based on the sum reference quantity $i^{\mathrm{ref}}_{d,sum}, T^{\mathrm{ref}}_{e,sum}$ and the at least one difference reference quantity $i^{\mathrm{ref}}_{d,diff}, T^{\mathrm{ref}}_{e,diff}$. For example, the machine-side converters 24 and/or the grid-side converters 28 are controlled based on the sum reference quantity $i^{\mathrm{ref}}_{d,sum}, T^{\mathrm{ref}}_{e,sum}$ and the at least one difference reference quantity $i^{\mathrm{ref}}_{d,diff}, T^{\mathrm{ref}}_{e,diff}$.

As one option shown in Fig. 2, the sum reference quantity $i^{\mathrm{ref}}_{d,sum}, T^{\mathrm{ref}}_{e,sum}$ and the at least one difference reference quantity $i^{\mathrm{ref}}_{d,diff}, T^{\mathrm{ref}}_{e,diff}$ are transformed back in block 46 to at least two reference quantities $i^{\mathrm{ref}}_{d,I}, i^{\mathrm{ref}}_{d,II}$ for the at least two converter branches 14a, 14b. Block 46 operates inverse to the blocks 38a, 38b, i.e. the inverse matrix of $M$ is applied to the vector formed of the sum and difference quantities. As shown in Fig. 2, the resulting reference quantities, such as reference currents $i^{\mathrm{ref}}_{d,I}, i^{\mathrm{ref}}_{d,II}$ and/or reference torques for the converter branches, are supplied to the branch controllers 48a, 48b, each of which controls one of the branches 14a, 14b or at least one of the converters 24, 28 of the branches 14a, 14b.

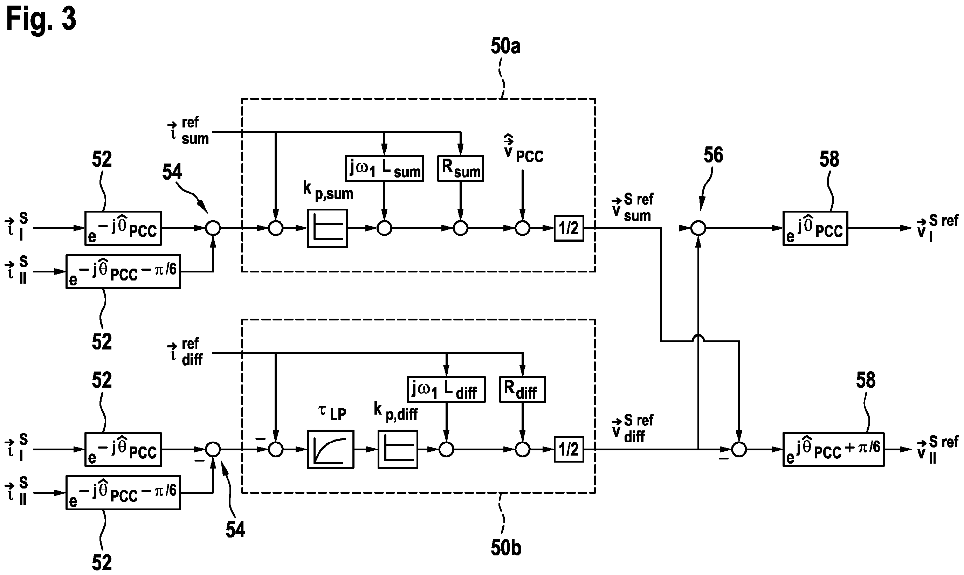

A further option is shown in Fig. 3, in which the sum reference quantity $i^{\mathrm{ref}}_{d,sum}, T^{\mathrm{ref}}_{e,sum}$ is input into a sum current controller 50a and the at least one difference reference quantity $i^{\mathrm{ref}}_{d,diff}, T^{\mathrm{ref}}_{e,diff}$ is input into a difference current controller 50b. Also this control scheme can be generalized to N-1 difference reference quantities.

Fig. 3 is an embodiment showing the currents and more general all quantities with vectors, i.e. complex numbers. The real part in the rotating reference frame is the d-axis component, such as the d-axis current. The real parts of the sum reference current $\vec{i}^{\,ref}_{sum}$ and of the difference reference current $\vec{i}^{\,ref}_{diff}$ may be provided by the balancing controllers 36a, 36b of Fig. 2.

The control of the currents of the generator-side converters 24 typically takes place in a common rotating reference frame which is aligned to the rotor PM flux. A decoupling of the currents of the two three-phase windings can be achieved by considering their sum and difference in the rotating reference frame.

The control of the currents of the grid-side converters 28 takes place in a common rotating reference frame aligned to the PCC voltage (voltage at the transformer primary winding). Decoupling of the currents of the two three-phase windings of the transformer 16 is achieved by considering their sum and difference in the rotating reference frame, similarly to the generator side.

At first, at least two AC-side currents $\vec{i}_{\mathrm{I}}^{\,S}, \vec{i}_{\mathrm{II}}^{\,S}$ (here two) are determined. For example, the AC-side currents $\vec{i}_{\mathrm{I}}^{\,S}, \vec{i}_{\mathrm{II}}^{\,S}$ may be measured or otherwise estimated. In their original form, the current vectors $\vec{i}_{\mathrm{I}}^{\,S}, \vec{i}_{\mathrm{II}}^{\,S}$ are in a stationary reference frame and/or may. They are calculated from the AC currents of each converter phase. In blocks 52, the AC-side current vectors $\vec{i}_{\mathrm{I}}^{\,S}, \vec{i}_{\mathrm{II}}^{\,S}$ are transformed in a rotating reference frame (such as a dq reference frame), which rotates with a fundamental frequency of the AC-side current vectors $\vec{i}_{\mathrm{I}}^{\,S}, \vec{i}_{\mathrm{II}}^{\,S}$. Furthermore, a phase shift of the AC-side current $\vec{i}_{\mathrm{II}}^{\,S}$ is eliminated.

Then, at 54, the sum and differences of the input currents $\vec{i}_{\mathrm{I}}^{\,S}, \vec{i}_{\mathrm{II}}^{\,S}$ are determined in a rotating reference frame. The sum reference quantity $\vec{i}_{\mathrm{sum}}^{\,ref}$ is input into a sum current controller 50a into which also the sum of the input currents $\vec{i}_{\mathrm{I}}^{\,S}, \vec{i}_{\mathrm{II}}^{\,S}$ is input. The at least one difference reference quantity $\vec{i}_{\mathrm{diff}}^{\,ref}$ is input into a respective difference current controller 50b into which the difference of two of the input currents $\vec{i}_{\mathrm{I}}^{\,S}, \vec{i}_{\mathrm{II}}^{\,S}$ is input.

The sum current controller 50a determines a sum reference voltage $\vec{v}_{\mathrm{sum}}^{\,S\,\mathrm{ref}}$ and the at least one difference current controller 50b determines at least one difference reference voltage $\vec{v}_{\mathrm{diff}}^{\,S\,\mathrm{ref}}$. These are transformed back at 56 to the branch related reference voltages $\vec{v}_{\mathrm{I}}^{\,S\,\mathrm{ref}}, \vec{v}_{\mathrm{II}}^{\,S\,\mathrm{ref}}$ in the rotating reference frame and are transformed back into the stationary reference frame in blocks 58.

Fig. 4 shows a sum balancing controller 36a supplying a sum current controller 50a with the d-axis component of a sum reference current $i_{\mathrm{d,sum}}^{\,\mathrm{ref}}$. Fig. 5 shows a difference balancing controller 36a supplying a difference current closed loop 50b with the d-axis component of a sum reference current $i_{\mathrm{d,sum}}^{\,\mathrm{ref}}$. The blocks 60 model the dc-link 26 reacting on the control of the controller 34. The controllers 36a, and 36b, and the current closed loops 50a, 50b of Fig. 4 and 5 may be used for controlling the dc-link 26.

If the dc-link balancing is done from the generator-side converter and the torque control is done via current control, then an average d- and q-axis reference current is calculated from the torque reference.

Fig. 6 shows a dc-link sum balancing controller 36a supplying a sum current closed loop 50a with a sum reference torque $T_{\mathrm{e,sum}}^{\,\mathrm{ref}}$, which is transformed into the q-axis component of a sum reference current $i_{\mathrm{q,sum}}^{\,\mathrm{ref}}$. Fig. 7 shows a difference balancing controller 36b supplying a difference current closed loop 50b with a difference reference torque $T_{\mathrm{e,diff}}^{\,\mathrm{ref}}$, which is transformed into the q-axis component of a difference reference current $i_{\mathrm{q,diff}}^{\,\mathrm{ref}}$. The controllers 36a, 36b, and the current closed loops 50a and 50b of Fig. 6 and 7 may be used for controlling the dc-link voltage from the machine side converter.

It may be that the DC link balancing is performed by the grid-side current controller (Fig. 4 and 5).

Alternatively, the DC link balancing is performed by the machine-side controller (Fig. 6 and 7). In this case, the DC link controller may ensure that the generator 12 delivers the power drawn for the grid 32. This may be desirable in the case of islanded operation or grid forming operation.

In such an operation mode, the DC link balancing controllers 36a, 36b outputs are the torque references

$T_{e,sum}^{ref}$, $T_{e,diff}^{ref}$ for the generator torque control. More specifically, the sum and the difference DC link balancing controllers 36a, 36b outputs are the sum and the difference torque reference, respectively. If current control is applied on the generator, then the torque reference $T_{e,sum}^{ref}$, $T_{e,diff}^{ref}$ is translated to a respective q-axis current reference $i_{q,sum}^{ref}$, $i_{q,diff}^{ref}$. This is exemplified in Fig. 6 and 7 for a PM synchronous generator 12 without saliency. For a PM machine with saliency, a so-called reluctance torque (which includes the d-axis current and the machine inductances) may have to be also considered in the calculation of the q-axis current reference $i_{q,sum}^{ref}$, $i_{q,diff}^{ref}$.

In the case of a sum and difference torque control via a non-linear stator flux controller, the outputs of the sum and difference voltage balancing controllers 36a, 36b may be directly fed to a sum and difference torque controller without any translation to q-axis current references.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

**Claims**

1. A method for controlling an electrical converter (14), the electrical converter (14) comprising at least two converter branches (14a, 14b) connected in parallel between a power source and/or load (12) and a transformer (16); the method comprising:

   measuring a DC link voltage ($v_{dc,I}$, $v_{dc,II}$) and determining a reference DC link voltage ( $v_{dc,I}^{ref}$, $v_{dc,II}^{ref}$ ) of a DC link (26) of each converter branch (14a, 14b);

   calculating a measured sum voltage ($v_{dc,sum}$), which is the sum of the measured DC link voltages ($v_{dc,I}$, $v_{dc,II}$), and at least one measured difference voltage ($v_{dc,diff}$), which is the difference of two of the at least two measured DC link voltages ($v_{dc,I}$, $v_{dc,II}$);

   calculating a reference sum voltage ( $v_{dc,sum}^{ref}$ ), which is the sum of the reference DC link voltages ( $v_{dc,I}^{ref}$, $v_{dc,II}^{ref}$ ) and at least one reference difference voltage ( $v_{dc,diff}^{ref}$ ), which is the difference of two of the at least two reference DC link voltages ( $v_{dc,I}^{ref}$, $v_{dc,II}^{ref}$ );

   calculating a sum voltage error ($\Delta v_{dc,sum}$), which is the difference of the measured sum voltage ($v_{dc,sum}$) and the reference measured sum voltage ( $v_{dc,sum}^{ref}$ ), and at least one difference voltage error ($\Delta v_{dc,diff}$), which is the difference of the measured difference voltage ($v_{dc,diff}$) and the reference difference voltage ( $v_{dc,diff}^{ref}$ );

   determining a sum reference quantity ( $i_{d,sum}^{ref}$, $T_{e,sum}^{ref}$ ) from the sum voltage error ($\Delta v_{dc,sum}$) by inputting the sum voltage error ($\Delta v_{dc,sum}$) into a sum PI controller (40a);

   determining at least one difference reference quantity ( $i_{d,diff}^{ref}$, $T_{e,diff}^{ref}$ ) from the at least one difference voltage error ($\Delta v_{dc,diff}$) by inputting the difference voltage error ($\Delta v_{dc,diff}$) into a difference PI controller (40b), wherein a gain ($k_{p,sum}$) of the sum PI controller (40a) is higher than a gain ($k_{p,diff}$) of the difference PI controller (40b);

controlling the converter branches (14a, 14b) based on the sum reference quantity ( $i_{d,sum}^{ref}, T_{e,sum}^{ref}$ ) and the at least one difference reference quantity ( $i_{d,diff}^{ref}, T_{e,diff}^{ref}$ ).

2. The method of claim 1,

   wherein a proportional gain ($k_{p,sum}$) of the sum PI controller (40a) is higher than a proportional gain ($k_{p,diff}$) of the difference PI controller (40b); and/or
   wherein the gain ($k_{p,sum}$) of the sum PI controller (40a) is at least 10 times higher than the gain ($k_{p,diff}$) of the difference PI controller (40b).

3. The method of claim 1 or 2,
   wherein the at least one difference voltage error ($\Delta v_{dc,diff}$) is input into a difference low-pass filter (44), before it is input into the difference PI controller (40b).

4. The method of claim 3,
   wherein the sum voltage error ($\Delta v_{dc,sum}$) is directly input into the sum PI controller (40a) without low-pass filtering.

5. The method of claim 3,
   wherein the sum voltage error ($\Delta v_{dc,sum}$) is input into a sum low-pass filter, before it is input into the sum PI controller (40a), which sum low-pass filter has a lower time constant than the difference low-pass filter.

6. The method of one of the previous claims,

   wherein the sum and/or difference reference quantity is a sum and/or difference reference current ( $i_{d,sum}^{ref}, i_{d,diff}^{ref}$ ) and/or a sum and/or difference reference torque ( $T_{e,sum}^{ref}, T_{e,diff}^{ref}$ ).

7. The method of one of the previous claims,

   wherein the sum reference quantity ( $i_{d,sum}^{ref}, T_{e,sum}^{ref}$ ) and the at least one difference reference quantity ( $i_{d,diff}^{ref}, T_{e,diff}^{ref}$ ) are transformed back to at least two reference quantities ( $i_{d,I}^{ref}, i_{d,II}^{ref}, T_{e,I}^{ref}, T_{e,II}^{ref}$ ) for the at least two converter branches (14a, 14b);
   wherein each converter branch (14a, 14b) is controlled based on its reference quantity.

8. The method of one of claims 1 to 6,

   wherein the sum reference quantity ( $i_{d,sum}^{ref}, T_{e,sum}^{ref}$ ) is input into a sum current controller (50a), which is controlling a sum of input currents ( $\vec{i}_I^S, \vec{i}_{II}^S$ ) in the converter branches (14a, 14b),
   wherein the at least one difference reference quantity is input into a respective difference current controller (50b) controlling a difference of two of the input currents ( $\vec{i}_I^S, \vec{i}_{II}^S$ ) in two converter branches (14a, 14b).

9. The method of claim 8,

   wherein the sum and differences of the input currents ( $\vec{i}_I^S, \vec{i}_{II}^S$ ) are determined in a rotating reference frame.

10. The method of one of the previous claims, further comprising:

    determining switching commands for the converter branches (14a, 14b) based on the sum reference quantity

( $i^{\text{ref}}_{\text{d,sum}}, T^{\text{ref}}_{\text{e,sum}}$ ) and the at least one difference reference quantity;
wherein the converter branches (14a, 14b) are controlled by applying the switching commands to the converter branches (14a, 14b).

11. The method of one of the previous claims,

   wherein each converter branch (14a, 14b) comprises a machine-side converter (24) and a grid-side converter (28), which are interconnected by a DC link (26);
   wherein the machine-side converters (24) and/or the grid-side converters (28) are controlled based on the sum reference quantity ( $i^{\text{ref}}_{\text{d,sum}}, T^{\text{ref}}_{\text{e,sum}}$ ) and the at least one difference reference quantity ( $i^{\text{ref}}_{\text{d,diff}}, T^{\text{ref}}_{\text{e,diff}}$ ).

12. A computer program for controlling an electrical converter (14), which, when being executed by a processor, is adapted to carry out the steps of the method of one of the previous claims.

13. A computer-readable medium, in which a computer program according to claim 12 is stored.

14. A controller (34) for controlling an electrical converter (14) adapted for performing the method of one of claims 1 to 11.

15. An electrical converter (14), comprising:

   at least two converter branches (14a, 14b) connected in parallel between a power source and/or load (12) and a transformer (16);
   a controller (34) according to claim 14.

Fig. 1

Fig. 2

EP 4 436 027 A1

**Fig. 3**

**Fig. 4**

**Fig. 5**

Fig. 6

Fig. 7

Europäisches
Patentamt
European
Patent Office
Office européen
des brevets

# EUROPEAN SEARCH REPORT

Application Number

EP 23 16 3687

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2022/223519 A1 (ABB SCHWEIZ AG [CH]) 27 October 2022 (2022-10-27) * figure 2 * | 1,6-15 | INV. H02M5/458 H02M1/12 H02M7/493 H02M7/5387 |
| Y | US 2022/166336 A1 (ECKEL HANS-GÜNTER [DE] ET AL) 26 May 2022 (2022-05-26) * figures 3K-3W * | 1,6-15 | |
| Y | LEE YOON-RO ET AL: "Control Strategy of Single-Phase Active Front-End Cascaded H-Bridge Under Cell Fault Condition", IEEE TRANSACTIONS ON POWER ELECTRONICS, INSTITUTE OF ELECTRICAL AND ELECTRONICS ENGINEERS, USA, vol. 34, no. 5, 1 May 2019 (2019-05-01), pages 4780-4793, XP011717882, ISSN: 0885-8993, DOI: 10.1109/TPEL.2018.2858009 [retrieved on 2019-04-02] * page 4784 - page 4785; figures 7, 8 * | 1,6-15 | |
| A | EP 3 264 593 A1 (SIEMENS AG [DE]) 3 January 2018 (2018-01-03) * paragraph [0014]; figures 1, 2 * | 1-15 | **TECHNICAL FIELDS SEARCHED (IPC)** H02M H02J |
| A | ROCHA NADY ET AL: "Parallel of Two Unidirectional AC-DC-AC Three-Leg Converters to Improve Power Quality", IEEE TRANSACTIONS ON POWER ELECTRONICS, INSTITUTE OF ELECTRICAL AND ELECTRONICS ENGINEERS, USA, vol. 33, no. 9, 1 September 2018 (2018-09-01), pages 7782-7794, XP011686261, ISSN: 0885-8993, DOI: 10.1109/TPEL.2017.2771464 [retrieved on 2018-06-29] * page 7785 - page 7786; figure 4 * | 1-15 | |

The present search report has been drawn up for all claims

| Place of search | Date of completion of the search | Examiner |
|---|---|---|
| The Hague | 31 August 2023 | van Wesenbeeck, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 3687

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2023

| Patent document cited in search report | Publication date | Patent family member(s) | Publication date |
|---|---|---|---|
| WO 2022223519 A1 | 27-10-2022 | EP 4080748 A1 | 26-10-2022 |
| | | WO 2022223519 A1 | 27-10-2022 |
| US 2022166336 A1 | 26-05-2022 | DE 102019108409 A1 | 01-10-2020 |
| | | EP 3949101 A1 | 09-02-2022 |
| | | US 2022166336 A1 | 26-05-2022 |
| | | WO 2020201323 A1 | 08-10-2020 |
| EP 3264593 A1 | 03-01-2018 | CN 107565871 A | 09-01-2018 |
| | | EP 3264593 A1 | 03-01-2018 |

EPO FORM P0459

For more details about this annex : see Official Journal of the European Patent Office, No. 12/82